# EUROPEAN PATENT SPECIFICATION

(11) **EP 4 438 493 B1**
(45) Date of publication and mention of the grant of the patent: **06.05.2026**
(21) Application number: 23166095.2
(22) Date of filing: 31.03.2023
(51) Int. Cl.: B64D 37/08, F17C 7/02

(54) **HYDROGEN SUPPLY UNIT FOR AN AIRCRAFT, METHOD OF SUPPLYING LIQUID HYDROGEN IN AN AIRCRAFT, AND AIRCRAFT**
WASSERSTOFFVERSORGUNGSEINHEIT FÜR EIN FLUGZEUG, VERFAHREN ZUR ZUFUHR VON FLÜSSIGEM WASSERSTOFF IN EIN FLUGZEUG UND FLUGZEUG
UNITÉ D'ALIMENTATION EN HYDROGÈNE POUR UN AÉRONEF, PROCÉDÉ D'ALIMENTATION EN HYDROGÈNE LIQUIDE DANS UN AÉRONEF ET AÉRONEF

(43) Date of publication of application: 02.10.2024
(73) Proprietor: Airbus Operations GmbH, 21129 Hamburg (DE)
(72) Inventor: Schulze-Reimann, Kai, 21129 Hamburg (DE)
(74) Representative: KASTEL Patentanwälte PartG mbB

(56) References cited:
- EP-A1- 3 176 490
- EP-A1- 3 708 896
- EP-A2- 1 355 107
- DE-A1- 102018 215 384
- US-A1- 2006 014 070
- US-A1- 2008 023 493
- US-B1- 6 178 991

## Description

The invention relates to a hydrogen supply unit for use in an aircraft. Further, the invention relates to a method of supplying liquid hydrogen in an aircraft. In addition, the invention relates to an aircraft.

In particular, the invention can be applied in aircrafts such as airplanes, helicopters and other objects that can fly.

Gas emissions having an impact on the climate have to be reduced. Particularly in aviation, a switch from conventional gas turbine engines to propulsion systems based on hydrogen (H2) has been identified as a growing market with a high number of aeroplanes in the next years and decades, in order to achieve zero emission flights. Many research institutes and companies have been searching for viable propulsion architectures to eliminate or reduce aircraft emissions for regional and larger aircrafts. In such aircrafts, the hydrogen is provided as liquid hydrogen (LH2) in a tank within the aircraft and supplied via pipes to the aircraft's propulsion engine and/or other consumer units of the aircraft.

US 6,178,991 B1 describes a safety container for storing and transporting environmentally hazardous substances including hydrogen, the container having inlets and outlets and glass wool filling the container, further comprising an inert gas chamber in the container. An aircraft equipped with wing tanks is shown, which are divided into individual tanks which are each filled with a latticework of glass wool.

DE 10 2018 215 384 A1 shows a tank device comprising a tank and a valve device. The tank comprises a tank housing in which a tank interior is formed. The tank housing comprises a neck portion with a passage opening, which opens at one end of the neck portion into the tank interior. At the opposite end of the neck portion, the valve device is formed. The valve device and the tank interior are sealed from an environment.

US 2008/0023493 A1 discloses a storage system for fuel cell gases. It comprises an outer shell and at least one bladder positioned inside the outer shell. A primary chamber is defined between the outer shell and the bladder, and a secondary chamber is defined interior to the bladder. The primary chamber maintains a first pressure range, and the secondary chamber maintains a second pressure range.

US 2006/0014070 A1 describes a storage device including a bladder that contains a hydrogen fuel source and conforms to the volume of the hydrogen fuel source.

EP 1 355 107 A2 discloses a pressure tank for holding a pressurized fluid. The tank comprises a receiving chamber comprising a receiving room which is limited by chamber walls. A non-return valve is fixed in a cover portion assigned to the receiving room.

EP 3 708 896 A1 shows a gas tank system comprising a gas tight outer shell in which a heat resistant shell is positioned for storing a gas. A channel is formed between the outer and the inner shell, through which hydrogen flows when the tank is filled. The inner shell has an outlet formed by an opening in the inner shell through which the gas flows when the tank is filled and when the gas is taken out.

EP 3 176 490 A1 describes a cryogenic tank for storing cryogenic liquids. It has an inner storage volume within a first wall and comprises a plurality of chambers within the inner storage volume.

When supplying the LH2 to the aircraft's propulsion or other consumer unit, accidental feeding of the pipes with gaseous H2 (GH2) in the tank needs to be avoided. Further, the amount of unusable LH2 remaining in the tank after a maximum LH2 extraction shall be minimized.

Therefore, it is the object of the invention to maximize utilization of the LH2 provided in an LH2 tank of an aircraft, and to prevent ingestion of gaseous hydrogen when liquid hydrogen from the tank is supplied to a consumer unit in the aircraft.

According to a first aspect, the invention provides a hydrogen supply unit for use in an aircraft, comprising a tank configured to store in its interior liquid hydrogen, an extraction chamber comprising one or more openings for extracting the liquid hydrogen from the tank through the extraction chamber, at least one line connected to the extraction chamber and configured for supplying the liquid hydrogen to a consumer unit of the aircraft, and at least one pump connected to the line, wherein the extraction chamber is provided in the interior of the tank and mounted on or near the bottom of the tank, wherein the openings are provided in the bottom of the extraction chamber close to the bottom of the tank.

Preferably, the extraction chamber is attached to a wall of the tank surrounding the hydrogen.

Preferably, two or more such extraction chambers are provided in the tank, wherein each extraction chamber is connected to an assigned valve.

Preferably, each valve is connected to a control unit configured for opening and closing the valves depending on attitudes and accelerations of the aircraft. Preferably, the control unit is configured for receiving data from the air data inertial reference system (ADIRS) of an aircraft in order to control the valves.

Preferably, each valve is provided in the respective line connected to the assigned extraction chamber.

Preferably, at least one extraction chamber is located in a rear section of the tank.

Preferably, at least one extraction chamber is located in a front section of the tank.

Preferably, at least one extraction chamber is mounted at or near the ceiling of the tank.

Preferably, at least a pair of extraction chambers is mounted at or near the ceiling of the tank, one of them being located in a rear section of the tank and one being located in a front section of the tank.

Preferably, one or more lines or pipes extend from the one or more extraction chambers through an aft outlet provided in a rear section or end of the tank and/or through a forward outlet provided in a front section or front end of the tank.

Preferably, one or more lines extend from the one or more extraction chambers exclusively through an aft outlet provided in a rear section or rear end of the tank.

Preferably, one or more lines extend from the one or more extraction chambers exclusively through a forward outlet provided in a front section or front end of the tank.

Preferably, the one or more pumps are configured for being positioned in the aircraft below and/or behind the aft outlet of the tank.

Preferably, the one or more pumps are configured for being positioned below and/or in front of the forward outlet of the tank.

According to a second aspect, the invention provides a method of supplying liquid hydrogen in an aircraft, comprising the steps: extracting liquid hydrogen from the interior of a tank of an aircraft through at least one extraction chamber, and supplying the liquid hydrogen from the extraction chamber to a consumer unit of the aircraft, wherein the extraction chamber is provided in the interior of the tank and mounted on or near the bottom of the tank, and comprising one or more openings provided in the bottom of the extraction chamber close to the bottom of the tank.

Preferably, two or more such extraction chambers are provided in the tank, wherein the liquid hydrogen is extracted at different extracting positions where the extraction chambers are located, which extracting positions are selected depending on current attitudes and accelerations of the aircraft.

Preferably, the hydrogen supply unit according to the invention is used when the method is performed.

According to a third aspect, the invention provides an aircraft, characterized by a hydrogen supply unit according to the invention.

Characteristics and advantages described in relation to the hydrogen supply unit are also related to the method of supplying liquid hydrogen, and vice versa.

In the following, exemplary embodiments of the invention showing further characteristics and advantages are described in detail with reference to the figures, in which:
- **Fig. 1**: shows a hydrogen supply unit according to a first preferred embodiment of the invention as a schematic sectional view; and
- **Fig. 2**: shows a hydrogen supply unit according to a second preferred embodiment of the invention as a schematic sectional view.

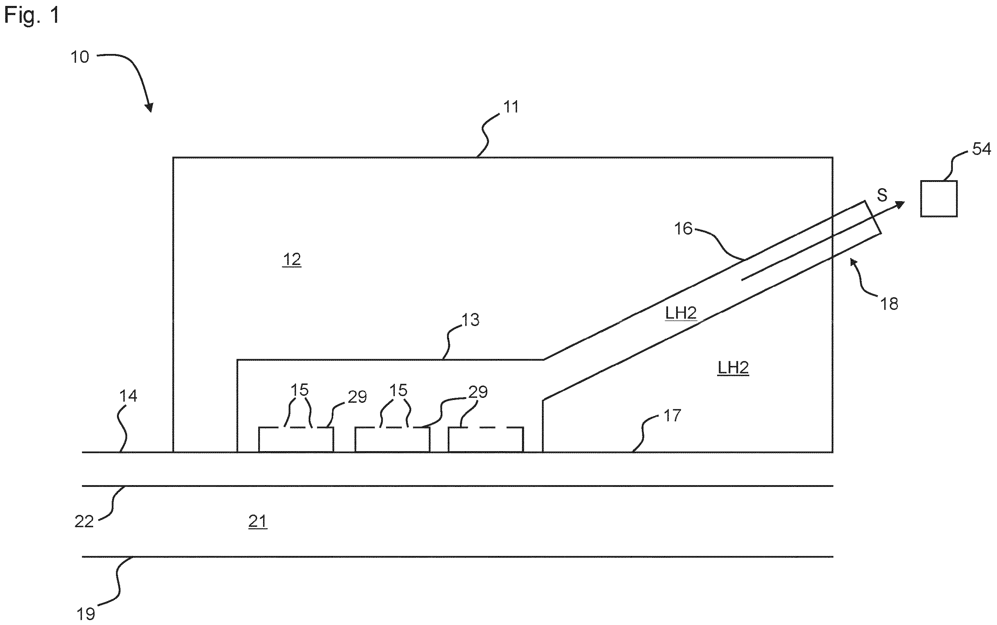

**Figure 1** shows a hydrogen supply unit 10 according to a first preferred embodiment of the invention. The hydrogen supply unit 10 comprises a tank 11 which is configured to store in its interior 12 hydrogen (H2) in liquid state, i.e. as liquid hydrogen (LH2). In the tank 11, an extraction chamber 13 is provided, which comprises at least one opening 15 or preferably a number of openings 15. The openings 15 are provided for extracting the liquid hydrogen from the interior 12 of tank 11 through the extraction chamber 13.

At least one line or pipe 16 is connected to the extraction chamber 13 inside tank 11. It is configured for supplying the liquid hydrogen or LH2 from the tank 11 to a consumer unit 54 of the aircraft, for example to a propulsion unit, as indicated by arrow S in the figure.

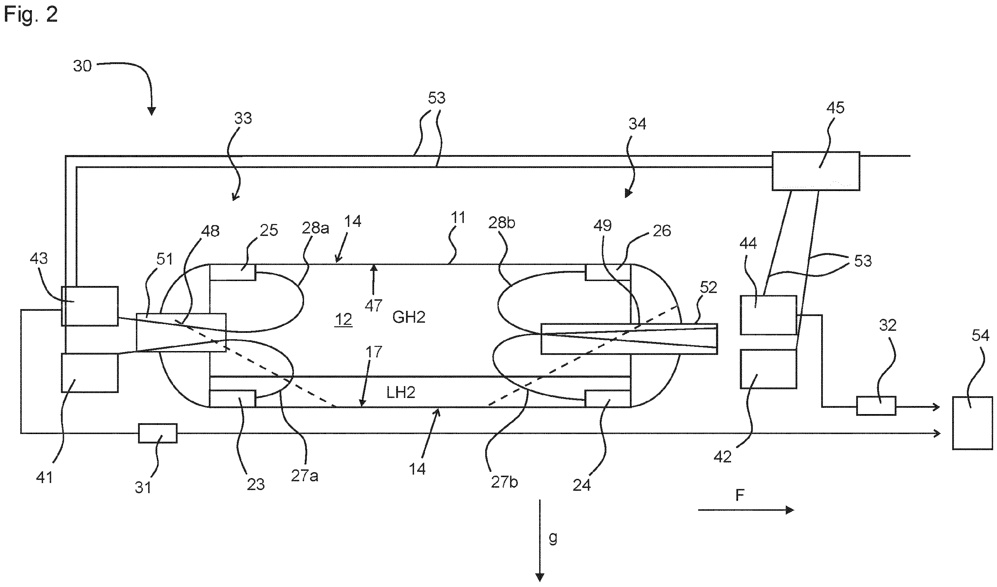

The hydrogen supply unit 10 e.g. comprises at least one pump connected to line 16. The pump may for example be arranged in the hydrogen supply unit 10 like or similarly to pump 31 or pump 32 shown in figure 2 which is described in detail further below.

The extraction chamber 13 is attached to a wall 14 of tank 11, which is an inner tank wall in this example. The extraction chamber 13 may e.g. be configured as an extraction pod. It is preferably welded to the inner tank wall 14 or installed by other means close to the wall 14.

In this example, extraction chamber 13 is mounted at or near the bottom 17 of tank 11 and positioned in a way that the openings 15 of extraction chamber 13 are located near or close above the bottom 17 of tank 11. The bottom 17 is formed by the inner side of the wall 14.

In particular, the openings 15 of extraction chamber 13 are formed in a lower wall 29 of extraction chamber 13. The openings 15 are flat and positioned with a very small distance from to the bottom 17 formed by inner wall 14 of tank 11, in order to be as close as possible to a flush installation. That means, the openings 15 are located at a very low height above wall 14 of the tank 11. In particular, the openings 15 of extraction chamber or pod 13 may have the same surface area as line or pipe 16, in order to not produce an additional drag during LH2 extraction. The openings 15 are e.g. formed as slits.

The line or pipe 16 connected to extraction chamber 13 extends through an outlet 18 provided in tank 11, which is preferably remotely located from the position where the extraction chamber 13 is installed. Preferably, the outlet 18 is located at a forward end of the tank and/or at an aft end of tank 11, as it will be explained as an example further below with reference to Fig. 2. Pipe 16 may e.g. further extend to a coldfinger.

Several such extraction chambers 13 may be installed in a similar manner within the interior 12 of tank 11.

In addition to inner tank wall 14, the structure of tank 11 comprises an outer tank wall 19 in order to provide a vacuum layer 21 between the inner tank wall and the outer tank wall 19. A multilayer insulation (MLI) 22 is preferably installed between the inner tank wall 14 and the outer tank wall 19.

Referring to **Figure 2** now, a hydrogen supply unit 30 according to a second preferred embodiment of the invention will be described. It may comprise a number of extraction chambers in a tank as described above

Also in this exemplary embodiment, the hydrogen supply unit 10 comprises a tank 11 which is configured for storing hydrogen, in particular liquid hydrogen (LH2), in the interior 12 of tank 11. Tank 11 may e.g. be configured as described above with reference to Fig. 1.

A number of extraction chambers 23, 24, 25, 26 are provided in tank 11, each comprising one or more openings 15 for extracting the liquid hydrogen from the tank 11 through the respective extraction chamber, as described above with reference to Fig. 1. The extraction chambers 23-26 are attached to the inner wall 14 of the tank 11 which surrounds its interior 12.

Each extraction chamber 23, 24, 25, 26 is connected to an associated line 27a, 27b, 28a, 28b for supplying the liquid hydrogen (LH2) to the consumer unit 54 of the aircraft which is equipped with hydrogen supply unit 10. Each line 27a, 27b, 28a, 28b extending from the respective extraction chamber 23, 24, 25, 26 is connected via an assigned valve 41, 42, 43, 44 to a pump 31 or 32.

The hydrogen supply unit 10 is configured for being mounted in an aircraft. The forward direction of the aircraft and of tank 11 is indicated by arrow F.

Tank 11 comprises a rear or aft section 33 and a front or forward section 34 in accordance with the forward direction F of the aircraft in which the hydrogen supply unit 10 is mounted.

All extraction chambers 23 to 26 are installed or welded to tank wall 14 which surrounds the interior 12 of the tank 11 in which the hydrogen is stored.

In this preferred embodiment of the invention, one pair 23, 24 of the extraction chambers is mounted on or near the bottom 17 of tank 11 formed by its lower wall 17, so that the respective openings 15 of the extraction chambers 23, 24 are as close as possible to the lower tank wall 17 to allow extraction of the liquid hydrogen from there. In this way, these extraction chambers or pods 23, 24 form lower extraction chambers.

In particular, the openings 15 are provided in the bottom 29 of the respective extraction chamber 23, 24, which is formed its lower wall. The openings are preferably provided in a way that they are facing the bottom wall 17 of tank 11, as described above with reference to Fig. 1.

Advantageously, the lower extraction chamber 23 is positioned in the rear section 33 of tank 11, while the other lower extraction chamber 24 is positioned in the front section 34 of tank 11.

Both extraction chambers 23, 24 are connected via their associated line 27a, 27b to their assigned valve 41 and 42 respectively, which are opened and closed during operation according to actual attitudes and accelerations of the aircraft.

In addition to the lower extraction chambers 23, 24, at least one further extraction chamber 25, 26 or pair of extraction chambers 25 and 26, may be mounted at or near the ceiling 47 of tank 11. The extraction chambers or pods 25, 26 thus form upper extraction chambers.

The upper extraction chamber 25 may be positioned in the rear section 33 of tank 11, while the other upper extraction chamber 26 may be positioned in the front section 34 of tank 11.

Both extraction chambers 25, 26 are connected via their respective line 28a, 28b to their assigned valve 43 and 44 respectively, which are opened and closed during operation according to current attitudes and accelerations of the aircraft.

A control unit 45 formed by a logics box is connected to the valves 41-44 by signal or data connections 53. The control unit 45 is configured for opening and closing the valves 41 to 44 depending on the current attitudes and accelerations of the aircraft in which the hydrogen supply unit 30 is provided. During operation, the logics box 45 receives the attitudes and accelerations of the aircraft via a data connection to the ADIRS (Air Data Inertial Reference System) of the aircraft. That means, the control unit or logics box 45 is configured for receiving data from the ADIRS in order to control the valves 41 to 44 depending on the received attitude and acceleration data.

As shown in Fig.2, a portion of the hydrogen within tank 11 is liquid hydrogen (LH2) and another portion of the hydrogen is gaseous hydrogen (GH2), wherein the GH2 is usually above the LH2. When the aircraft and thus also tank 11 is in horizontal orientation, the liquid hydrogen LH2 within tank 11 usually covers the lower extraction chambers or extraction pods 23, 24 mounted on or near the bottom 17 of tank 11.

In this situation, the valves 41, 42 connected to the lines 27a, 27b extending from the lower extraction chambers 23, 24 covered by LH2 are opened according to the acceleration and attitude data received by control unit 45 from the ADIRS.

As an example, a method of supplying liquid hydrogen in an aircraft is described in more detail the following with reference to **Figures 1** **and** **2****:**
Liquid hydrogen LH2 stored in tank 11 is extracted through at least one extraction chamber 13, 23, 24, 25, 26 provided in the tank 11 and attached to inner wall 14 of the tank. The extracted liquid hydrogen LH2 is supplied via at least one line 16, 27a, 27b, 28a, 28b and one or more pumps 31, 32 connected thereto from the one or more extraction chambers to a consumer unit 54 of the aircraft.

If two or more extraction chambers are provided in tank 11, the liquid hydrogen is preferably extracted at the different extraction positions where the extraction chambers 13, 23, 24, 25, 26 are located. The extraction positions in the tank 11 are varied or selected depending on the current attitude an acceleration of the aircraft.

For example, if the aircraft is on the ground or in horizontal orientation and not accelerated, the liquid hydrogen contained in tank 11 covers the extraction chambers 23, 24 installed at the bottom 17 of tank 11. In this case, the valves 41, 42 assigned to extraction chambers 23 and 24 respectively, which are mounted at or near the bottom or lower wall 17 of tank 11, are opened, while the valves 43, 44 assigned to extraction chambers 25 and 26 respectively, which are mounted at or near the ceiling or upper wall 47 of tank 11, are closed and thus avoid an extraction of the gaseous hydrogen GH2 above the liquid hydrogen LH2 from the tank 11.

When the aircraft is climbing and/or accelerated, it may happen depending on the amount of liquid hydrogen in the tank 11, that only the extraction chamber 23 provided in the rear section 33 of tank 11 is covered by the liquid hydrogen LH2, as depicted in Fig. 2 by the LH2 surface 48. All other extraction chambers 24 to 26 are surrounded by gaseous hydrogen GH2 in that situation.

In this case, only the valve 41 assigned to the rear lower extraction chamber 23 is opened, while the other valves 42, 43 and 44 are closed. Thus, only the liquid hydrogen LH2 in tank 11 will be supplied to the consumer unit 54 of the aircraft.

When the aircraft is descending or is accelerating negatively, it may happen depending on the amount of LH2 in tank 11, that only the lower extraction chamber 24 located at or near the bottom 17 of tank 11 in its front section 34 is covered with liquid hydrogen, as indicated by LH2 surface 49 in Fig. 2. In this situation, all other extraction chambers 23, 25, 26 are surrounded by gaseous hydrogen GH2. In this case, only valve 42 associated to the front lower extraction chamber 24 is opened, while all other valves 41, 43 and 44 are closed. Thus, only the liquid hydrogen LH2 in tank 11 will be supplied to the consumer unit 54 of the aircraft.

Optionally, as described above, one or more extraction chambers 25, 26 may be mounted near or at the ceiling 47 of tank 11.

In this case, when an acceleration opposite to gravitational acceleration g is acting on the aircraft and on the tank 11 mounted therein, it may happen that one or more of the upper extraction chambers 25, 26 installed at or near the ceiling 47 of tank 11 are surrounded by the liquid hydrogen LH2, while the lower extraction chambers 23, 24 mounted at or near bottom 17 are surrounded by the gaseous hydrogen GH2. In this case, only the valve or valves 43, 44 connected to the upper extraction chamber or chambers 25, 26 are opened.

That means, that even for a longer period of an acceleration acting on the aircraft which is opposite to the gravitational acceleration g, liquid hydrogen can be extracted as the extraction chambers or pods 25 and/or 26 positioned on or near the ceiling 47 can be used.

In particular, the hydrogen supply unit 13 as shown in figure 2 with extraction chambers at different positions within tank 11 allow extraction in any aircraft attitude.

As shown in Fig. 2, tank 11 comprises a first outlet 51 in its rear or aft section 33, and a second outlet 52 in its front or forward section 34. Thus, the first outlet 51 forms a rear or aft outlet, and the second outlet 52 forms a front of forward outlet.

In particular, the outlets 51, 52 extend through polar mounts provided in the forward section 34 and the aft section 33 of tank 11. This allows a higher static pressure at the pumps 31, 32 than with an outlet only in the front section 34.

The aft pump 31 is preferably positioned below and most preferably also behind the aft outlet 51 of tank 11. The front or forward pump 32 is preferably positioned below and most preferably further forward than the forward outlet 34 of tank 11.

A specific advantage of this arrangement is that for example with the aircraft in climb, the aft outlet 51 is activated or can be activated, wherein the aft pump 31 is well below the tank 11. Thus, the hydrogen's static pressure supports the pump operation. This is especially supportive during TOGA (Take-Off/Go-Around) conditions, where the aircraft raises its angle of attack to get more lift.

According to another embodiment which is not shown in the figures, the tank 11 comprises only the forward outlet 52 as a single outlet, and all piping or lines 27, 28 are guided through that single forward outlet 52. In this case, there is no aft tank outlet, but the different positions of the extraction chambers 23-26 are kept as described above, in this example four positions. This configuration reduces the amount of pump head or static pressure. However, the specific advantage is that the number of throughputs in the tank 11 are reduced.

As an alternative, the complete equipment comprising the pumps 31, 32 and/or the valves 41-44 is installed in the aft of the aircraft to raise the static pressure, as the aft or rear installation of the equipment is more helpful with a positive angle of attack, where the most pump performance and mass flow is needed. In this case all piping or lines 27, 28 are guided through the single aft or rear outlet 51.

### List of reference numbers:

- 10, 30: hydrogen supply unit
- 11: tank
- 12: interior of tank
- 13: extraction chamber or pod
- 14: inner wall of tank
- 15: openings
- 16: line / pipe
- 17: bottom or lower wall of tank
- 18: outlet
- 19: outer tank wall
- 21: vacuum layer
- 22: multilayer insulation / MLI
- 23, 24: lower extraction chambers
- 25, 26: upper extraction chambers
- 27a, 27b: lines or pipes
- 28a, 28b: lines or pipes
- 29: bottom or lower wall of extraction chamber
- 31: aft pump
- 32: forward pump
- 33: rear or aft section of tank
- 34: front or forward section of tank
- LH2: liquid hydrogen
- GH2: gaseous hydrogen
- 41, 42: valves
- 43, 44: valves
- 45: control unit / logics box
- 47: ceiling of tank
- 48: LH2 surface when aircraft is climbing
- 49: LH2 surface when aircraft is descending
- 51: rear or aft outlet
- 52: front or forward outlet
- 53: signal connections
- 54: consumer unit

- F: forward direction of the aircraft
- g: gravitational acceleration

## Claims

1. Hydrogen supply unit (10, 30) for use in an aircraft, comprising a tank (11) configured to store in its interior (12) liquid hydrogen (LH2),
an extraction chamber (13; 23, 24, 25, 26) comprising one or more openings (15) for extracting the liquid hydrogen (LH2) from the tank (11) through the extraction chamber (13; 23, 24, 25, 26),
at least one line (16; 27a, 27b, 28a, 28b) connected to the extraction chamber (13; 23, 24, 25, 26) and configured for supplying the liquid hydrogen (LH2) to a consumer unit (54) of the aircraft, and
at least one pump (31, 32) connected to the line (16; 27a, 27b, 28a, 28b);
**characterized in that**
the extraction chamber (13; 23, 24, 25, 26) is provided in the interior (12) of the tank (11) and mounted on or near the bottom (17) of the tank (11), wherein the openings (15) are provided in the bottom (29) of the extraction chamber (13; 23, 24, 25, 26) close to the bottom (17) of the tank (11).

2. Hydrogen supply unit according to claim 1, **characterized in that** two or more such extraction chambers (13; 23, 24, 25, 26) are provided, wherein each extraction chamber (13; 23, 24, 25, 26) is connected to an assigned valve (41, 42, 43, 44), each valve (41, 42, 43, 44) being connected to a control unit (45) configured for opening and closing the valves (41, 42, 43, 44) depending on attitudes and accelerations data of an aircraft when the hydrogen supply unit (10, 30) is operated therein.

3. Hydrogen supply unit according to one of the preceding claims, **characterized in that**
3.1. at least one extraction chamber (23, 25) is located in a rear section (33) of the tank (11), and at least one extraction chamber (24, 26) is located in a front section (34) of the tank (11); and/or
3.2. at least one extraction chamber (25, 26) is mounted at or near the ceiling (47) of the tank (11); and/or
3.3. at least a pair of extraction chambers (25, 26) is mounted at or near the ceiling (47) of the tank (11), one of them (25) being located in a rear section (33) of the tank (11) and one of them (26) being located in a front section (34) of the tank (11).

4. Hydrogen supply unit according to one of the preceding claims, **characterized in that** the one or more lines (16; 27a, 27b, 28a, 28b) extend from the one or more extraction chambers (13; 23, 24, 25, 26)
4.1. through an aft outlet (51) provided in a rear section (33) or end of the tank (11) and/or through a forward outlet (52) provided in a front section (34) or end of the tank (11); and or
4.2. exclusively through an aft outlet (51) provided in a rear section (33) or end of the tank (11); and/or
4.3. exclusively through a forward outlet (52) provided in a front section (34) or end of the tank (11).

5. Hydrogen supply unit according to claim 4, **characterized in that** the one or more pumps (31, 32) are configured for being positioned in the aircraft
5.1. below and/or behind the aft outlet (51) of the tank (11); and/or
5.2. below and/or in front of the forward outlet (52) of the tank (11).

6. Aircraft, **characterized by** a hydrogen supply unit (10; 30) according to one of claims 1 to 5.

7. Method of supplying liquid hydrogen in an aircraft, comprising the steps:
a) extracting liquid hydrogen (LH2) from the interior (12) of a tank (11) of an aircraft through at least one extraction chamber (13; 23, 24, 25, 26), and
b) supplying the liquid hydrogen (LH2) from the extraction chamber (13; 23, 24, 25, 26) to a consumer unit (54) of the aircraft;
**characterized in that**
the extraction chamber (13; 23, 24, 25, 26) is provided in the interior (12) of the tank (11) and mounted on or near the bottom (17) of the tank (11),
and comprising one or more openings (15) provided in the bottom (29) of the extraction chamber (13; 23, 24, 25, 26) close to the bottom (17) of the tank (11).

8. Method according to claim 7, **characterized in that** two or more such extraction chambers (13; 23, 24, 25, 26) are provided in the tank (11), wherein the liquid hydrogen (LH2) is extracted at different extracting positions where the extraction chambers (13, 23, 24, 25, 26) are located, which extracting positions are selected depending on current attitudes and accelerations of the aircraft.

9. Method according to claim 7 or 8, **characterized in that** the hydrogen supply unit (10; 30) according to one of claims 1 to 5 is used.

## Patentansprüche

1. Wasserstoffzufuhreinheit (10, 30) zur Verwendung in einem Luftfahrzeug, umfassend
einen Tank (11), der dazu ausgelegt ist, in seinem Inneren (12) flüssigen Wasserstoff (LH2) zu speichern, eine Extraktionskammer (13; 23, 24, 25, 26), die eine oder mehrere Öffnungen (15) zum Extrahieren des flüssigen Wasserstoffs (LH2) aus dem Tank (11) durch die Extraktionskammer (13; 23, 24, 25, 26) umfasst, mindestens eine Leitung (16; 27a, 27b, 28a, 28b), die mit der Extraktionskammer (13; 23, 24, 25, 26) verbunden und zum Zuführen des flüssigen Wasserstoffs (LH2) zu einer Verbrauchereinheit (54) des Luftfahrzeugs ausgelegt ist, und
mindestens eine Pumpe (31, 32), die mit der Leitung (16; 27a, 27b, 28a, 28b) verbunden ist;
**dadurch gekennzeichnet, dass**
die Extraktionskammer (13; 23, 24, 25, 26) im Inneren (12) des Tanks (11) bereitgestellt und am oder nahe dem Boden (17) des Tanks (11) montiert ist,
wobei die Öffnungen (15) im Boden (29) der Extraktionskammer (13; 23, 24, 25, 26) nahe dem Boden (17) des Tanks (11) bereitgestellt sind.

2. Wasserstoffzufuhreinheit nach Anspruch 1, **dadurch gekennzeichnet, dass** zwei oder mehr derartige Extraktionskammern (13; 23, 24, 25, 26) bereitgestellt sind, wobei jede Extraktionskammer (13; 23, 24, 25, 26) mit einem zugeordneten Ventil (41, 42, 43, 44) verbunden ist, wobei jedes Ventil (41, 42, 43, 44) mit einer Steuereinheit (45) verbunden ist, die zum Öffnen und Schließen der Ventile (41, 42, 43, 44) in Abhängigkeit von Lagen und Beschleunigungsdaten eines Luftfahrzeugs, wenn die Wasserstoffzufuhreinheit (10, 30) darin betrieben wird, ausgelegt ist.

3. Wasserstoffzufuhreinheit nach einem der vorhergehenden Ansprüche, **dadurch gekennzeichnet, dass**
3.1. mindestens eine Extraktionskammer (23, 25) in einem hinteren Abschnitt (33) des Tanks (11) angeordnet ist und mindestens eine Extraktionskammer (24, 26) in einem vorderen Abschnitt (34) des Tanks (11) angeordnet ist; und/oder
3.2. mindestens eine Extraktionskammer (25, 26) an oder nahe der Decke (47) des Tanks (11) montiert ist; und/oder
3.3. mindestens ein Paar von Extraktionskammern (25, 26) an oder nahe der Decke (47) des Tanks (11) montiert ist, wobei eine derselben (25) in einem hinteren Abschnitt (33) des Tanks (11) angeordnet ist und eine derselben (26) in einem vorderen Abschnitt (34) des Tanks (11) angeordnet ist.

4. Wasserstoffzufuhreinheit nach einem der vorhergehenden Ansprüche, **dadurch gekennzeichnet, dass** sich die eine oder die mehreren Leitungen (16; 27a, 27b, 28a, 28b) von der einen oder den mehreren Extraktionskammern (13; 23, 24, 25, 26) wie folgt erstrecken
4.1. durch einen hinteren Auslass (51), der in einem hinteren Abschnitt (33) oder Ende des Tanks (11) bereitgestellt ist, und/oder durch einen vorderen Auslass (52), der in einem vorderen Abschnitt (34) oder Ende des Tanks (11) bereitgestellt ist; und oder
4.2. ausschließlich durch einen hinteren Auslass (51), der in einem hinteren Abschnitt (33) oder Ende des Tanks (11) bereitgestellt ist; und/oder
4.3. ausschließlich durch einen vorderen Auslass (52), der in einem vorderen Abschnitt (34) oder Ende des Tanks (11) bereitgestellt ist.

5. Wasserstoffzufuhreinheit nach Anspruch 4, **dadurch gekennzeichnet, dass** die eine oder die mehreren Pumpen (31, 32) dazu ausgelegt sind, wie folgt in dem Luftfahrzeug positioniert zu sein
5.1. unter und/oder hinter dem hinteren Auslass (51) des Tanks (11); und/oder
5.2. unter und/oder vor dem vorderen Auslass (52) des Tanks (11).

6. Luftfahrzeug, **gekennzeichnet durch** eine Wasserstoffzufuhreinheit (10; 30) nach einem der Ansprüche 1 bis 5.

7. Verfahren zum Zuführen von flüssigem Wasserstoff in einem Luftfahrzeug, das die folgenden Schritte umfasst:
a) Extrahieren von flüssigem Wasserstoff (LH2) aus dem Inneren (12) eines Tanks (11) eines Luftfahrzeugs durch mindestens eine Extraktionskammer (13; 23, 24, 25, 26), und
b) Zuführen des flüssigen Wasserstoffs (LH2) von der Extraktionskammer (13; 23, 24, 25, 26) zu einer Verbrauchereinheit (54) des Luftfahrzeugs;
**dadurch gekennzeichnet, dass**
die Extraktionskammer (13; 23, 24, 25, 26) im Inneren (12) des Tanks (11) bereitgestellt und am oder nahe dem Boden (17) des Tanks (11) montiert ist,
und eine oder mehrere Öffnungen (15) umfasst, die im Boden (29) der Extraktionskammer (13; 23, 24, 25, 26) nahe dem Boden (17) des Tanks (11) bereitgestellt sind.

8. Verfahren nach Anspruch 7, **dadurch gekennzeichnet, dass** zwei oder mehr derartige Extraktionskammern (13; 23, 24, 25, 26) in dem Tank (11) bereitgestellt sind,
wobei der flüssige Wasserstoff (LH2) an verschiedenen Extraktionspositionen extrahiert wird, an denen sich die Extraktionskammern (13, 23, 24, 25, 26) befinden, wobei die Extraktionspositionen in Abhängigkeit von aktuellen Lagen und Beschleunigungen des Luftfahrzeugs ausgewählt werden.

9. Verfahren nach Anspruch 7 oder 8, **dadurch gekennzeichnet, dass** die Wasserstoffzufuhreinheit (10; 30) nach einem der Ansprüche 1 bis 5 verwendet wird.

## Revendications

1. Unité d'alimentation en hydrogène (10, 30) destinée à être utilisée dans un aéronef, comprenant un réservoir (11) conçu pour stocker à l'intérieur (12) de l'hydrogène liquide (LH2),
une chambre d'extraction (13 ; 23, 24, 25, 26) comprenant une ou plusieurs ouvertures (15) pour extraire l'hydrogène liquide (LH2) du réservoir (11) à travers la chambre d'extraction (13 ; 23, 24, 25, 26),
au moins une conduite (16 ; 27a, 27b, 28a, 28b) raccordée à la chambre d'extraction (13 ; 23, 24, 25, 26) et conçue pour alimenter en hydrogène liquide (LH2) une unité consommateur (54) de l'aéronef, et
au moins une pompe (31, 32) raccordée à la conduite (16 ; 27a, 27b, 28a, 28b) ;
**caractérisée en ce que**
la chambre d'extraction (13 ; 23, 24, 25, 26) est située à l'intérieur (12) du réservoir (11) et montée sur ou à proximité de la partie inférieure (17) du réservoir (11), les ouvertures (15) étant situées dans la partie inférieure (29) de la chambre d'extraction (13 ; 23, 24, 25, 26) à proximité de la partie inférieure (17) du réservoir (11).

2. Unité d'alimentation en hydrogène selon la revendication 1, **caractérisée en ce que** deux chambres d'extraction (13 ; 23, 24, 25, 26) ou plus sont fournies, chaque chambre d'extraction (13 ; 23, 24, 25, 26) étant raccordée à une vanne (41, 42, 43, 44) associée, chaque vanne (41, 42, 43, 44) étant raccordée à une unité de commande (45) conçue pour ouvrir et fermer les vannes (41, 42, 43, 44) en fonction des données d'attitude et d'accélération d'un aéronef lorsque l'unité d'alimentation en hydrogène (10, 30) fonctionne en son sein.

3. Unité d'alimentation en hydrogène selon l'une des revendications précédentes, **caractérisée en ce que**
3.1. au moins une chambre d'extraction (23, 25) est située dans une partie arrière (33) du réservoir (11), et au moins une chambre d'extraction (24, 26) est située dans une partie avant (34) du réservoir (11) ; et/ou
3.2. au moins une chambre d'extraction (25, 26) est montée au niveau ou à proximité de la partie inférieure (47) du réservoir (11) ; et/ou
3.3. au moins une paire de chambres d'extraction (25, 26) est montée au niveau ou à proximité de la partie inférieure (47) du réservoir (11), l'une d'elles (25) étant située dans une partie arrière (33) du réservoir (11) et l'une d'elles (26) étant située dans une partie avant (34) du réservoir (11).

4. Unité d'alimentation en hydrogène selon l'une quelconque des revendications précédentes, **caractérisée en ce que** la ou les conduites (16 ; 27a, 27b, 28a, 28b) s'étendent à partir de la ou des chambres d'extraction (13 ; 23, 24, 25, 26)
4.1. à travers une sortie arrière (51) située dans une section arrière (33) ou une extrémité du réservoir (11) et/ou à travers une sortie avant (52) située dans une section avant (34) ou une extrémité du réservoir (11) ; et/ou
4.2. exclusivement à travers une sortie arrière (51) située dans une section arrière (33) ou une extrémité du réservoir (11) ; et/ou
4.3. exclusivement à travers une sortie avant (52) située dans une section avant (34) ou une extrémité du réservoir (11).

5. Unité d'alimentation en hydrogène selon la revendication 4, **caractérisée en ce que** la ou les pompes (31, 32) sont conçues pour être positionnées dans l'aéronef
5.1. sous et/ou derrière la sortie arrière (51) du réservoir (11) ; et/ou
5.2. sous et/ou devant la sortie avant (52) du réservoir (11).

6. Aéronef, **caractérisé par** une unité d'alimentation en hydrogène (10 ; 30) selon l'une des revendications 1 à 5.

7. Procédé de fourniture d'hydrogène liquide dans un aéronef, comprenant les étapes consistant à :
a) extraire de l'hydrogène liquide (LH2) de l'intérieur (12) d'un réservoir (11) d'un aéronef à travers au moins une chambre d'extraction (13 ; 23, 24, 25, 26), et
b) fournir l'hydrogène liquide (LH2) de la chambre d'extraction (13 ; 23, 24, 25, 26) à une unité consommateur (54) de l'aéronef ;
**caractérisée en ce que**
la chambre d'extraction (13 ; 23, 24, 25, 26) est située à l'intérieur (12) du réservoir (11) et montée sur ou à proximité de la partie inférieure (17) du réservoir (11), et comprend une ou plusieurs ouvertures (15) situées dans la partie inférieure (29) de la chambre d'extraction (13 ; 23, 24, 25, 26) à proximité de la partie inférieure (17) du réservoir (11).

8. Procédé selon la revendication 7, **caractérisé en ce que** deux chambres d'extraction (13 ; 23, 24, 25, 26) ou plus sont situées dans le réservoir (11),
l'hydrogène liquide (LH2) étant extrait dans des positions d'extraction différentes où sont situées les chambres d'extraction (13, 23, 24, 25, 26), lesquelles positions d'extraction étant sélectionnées en fonction des accélérations et des attitudes actuelles de l'aéronef.

9. Procédé selon la revendication 7 ou 8, **caractérisé en ce que** l'unité d'alimentation en hydrogène (10 ; 30) selon l'une des revendications 1 à 5 est utilisée.
